# EUROPEAN PATENT APPLICATION

(11) **EP 0 652 352 A1**
(43) Date of publication of application: **10.05.1995**
(21) Application number: 94907571.7
(22) Date of filing: 14.02.1994
(51) Int. Cl.: F01K 23/10

(54) **RECYCLING OF EXHAUST GASES FROM A GAS TURBINE FOR THE SECOND INTERMEDIARY REHEATING OF A MAIN FLOW OF A STEAM CYCLE**

(30) Priority: 14.05.1993 ES 9301044; 20.10.1993 ES 9302196
(71) Applicant: SEVILLANA DE ELECTRICIDAD, S.A, E-41004 Sevilla (ES); DIEZ VALLEJO, Luis E., E-28010 Madrid (ES); Mendoza Rosado, Serafin, E-28010 Madrid (ES)
(72) Inventor: DIEZ VALLEJO, Luis, E., E-28010 Madrid (ES); MENDOZA ROSADO, Serafin, E-28010 Madrid (ES); DE LARA CRUZ, Antonio, E-41004 Sevilla (ES)
(74) Representative: Perez Bonal, Bernardo
(86) International application number: ES9400016
(87) International publication number: WO9427033

(57) **Abstract**

Method for improving the operation of electric plants, of combined cycle, with parallel delivery of energy to the steam cycle in a boiler of fossil fuel (1), preferably coal, consisting in carrying out a second intermediary reheating with steam in the recovery exchanger (3) of exhaust gases from the gas turbine (2), thereby exploiting part of the gas energy, essentially in the high temperature area. Part of this reheated steam may be derived for its expansion into another steam turbine (7) which operates only in these conditions. In relation to existing solutions, the disclosed process provides a reduction of energetic losses by heat transmission in the recovery exchanger as well as of energetic losses derived from the formation of humidity in the steam turbine; as a result, the global efficiency of the plant is improved in design conditions, the availability of the plant is enhanced, its costs of maintenance are reduced and the average efficiency in the long term is also increased.

## Description

The invention relates to a process of enhancement, applicable to combined cycle electric power plants, in which, besides feeding fuel, generally natural gas, to the gas turbine, there is a parallel delivery of fossil fuel not suitable for gas turbine, generally coal, to a combustion boiler, so that the steam cycle absorbs energy of both exhaust gases from the gas turbine and gases of the combustion boiler.

This type of combined cycle thermal power plants with combustion boiler in parallel are quite usual as a consequence of repowering projects of existing coal-fired power plants by coupling a gas turbine so that gas-turbine exhaust gases are used by the existing steam cycle.

There are likewise proposals of building new power plants with this concept of jointly using natural gas and coal in the same group, basically owing to that this solution can offer in certain cases better techno-economical results than those offered by two standalone power plants, i.e. one of combined cycle using natural gas and the other of conventional steam cycle with pulverized coal boiler. This is especially true when the total output of the two independent plants is equal to that of the plant combining coal and gas. They offer, on the other hand, the possibility of using, or projecting the future use of, gases produced by partial coal gasification as fuel for the gas turbine and solid refuse of said gasification as fuel for the combustion boiler.

Both in the power plant repowering projects and new coal-gas combined plant proposals, the waste heat of exhaust gases from gas turbine is employed for various purposes that suit the basic characteristics of the typical steam cycle used at thermal power plants, with regenerative heating of water and intermediate heating of steam. In line with this, the gases are, or proposed to be, used for: partial or total heating of condensates and/or feedwater; generation of additional steam in similar pressure and temperature conditions to those of turbine high-, intermediate- or low-pressure body; in brief for a series of utilization in accordance with the basic characteristics of the steam cycle that do not entail additional exergy losses in the coal boiler. Because of this, besides the operational problems involved, it is not desirable to carry out superheating nor intermediate reheating of all the main steam flow in the recovery heat exchanger of exhaust gases.

With this type of solutions, the adaptation of the energy absorption curve of the steam cycle working fluid to the yielding curve of the gas turbine exhaust gases in the diagram temperature - exchanged thermal power of the recovery heat exchanger is far from optimization, especially in the high-temperature area of the recovery heat exchanger, and thus the exergy losses through heat transmission this implies limit the global efficiency of the plant.

On the other hand, another factor that causes an important exergy loss is the wetness formation in the last expansion stages of steam in the turbine, which, besides reducing the isoentropic efficiency in design conditions, causes deterioration of blades, thus increasing maintenance costs, diminishing the plant availability and accelerating the efficiency decrease with operation wear.

The process of enhancement proposed herein achieves reducing the two limitations described regarding existing solutions, by carrying out a second intermediate reheating of the main steam flow using the energy of exhaust gases from the gas turbine in the highest temperature area of the recovery heat exchanger. With this, a notable improvement is achieved in adapting the heat yield and absorption curves, on the one hand and, on the other, the final wetness in turbine expansion is reduced. The two factors mean a reduction in exergy losses of the process of converting thermal energy into mechanical energy and, therefore, an increase in the plant efficiency, besides the enhancements in maintenance, availability and average annual efficiency in a long term, derived from the smaller deterrioration of blades.

It must be noted that the resulting schematic of applying this process of enhancement to combined cycle power plants with parallel delivery of energy to the steam cycle in a fossil fuel boiler offers some thermal advantages and much higher economical results than those offered by the solution of carrying out a typical double reheating in the boiler, whose techno-economical results are not positive, to such an extent that hardly any thermal power plants have been implemented with this solution, since a cycle with single intermediate reheating is more cost effective at this moment. The fundamental advantages of the proposed process of enhancement over the solution of double reheating in boiler, which has not even been proposed for the type of coal-gas combined power plants due to its poor profitability and small advantage in efficiency, are as follows:
- Possibility of using finned tubes for carrying out the second reheating owing to the cleanness of the gas turbine exhaust gases, allowing small thermal differences in the recovery heat exchanger with minimum exergy losses through heat transmission.
- Absence of the need to maintain a high cooling capacity inside the tubes of the second reheater to prevent breakage by overheating, which allows to design this reheater with lower steam speed and load losses, reducing likewise the exergy losses by this cause.
- Smaller or zero flow of condensate heated by turbine extractions after the second reheating of steam, which means a reduction or elimination of additional exergy losses therein by heat transmission, as a consequence of the second reheating, thus improving the global effectiveness of the same.

On the other hand, given the difficulties inherent to the implementation of steam reheating at low pressure, even under the more favorable conditions of this invention, there would be the possibility, especially in those cases in which it is desired to carry out the second reheating at very low pressure, of using a thermal transfer fluid, which can even be water at the maximum pressure of the steam cycle if the maximum temperature of the second reheating is not very high.

Naturally, the recovery of energy from exhaust gases carried out in the second reheating that characterizes this invention must be complemented with some of the typical solutions already mentioned at the beginning of this description, up to the techno-economically optimum outlet temperature of the gases from the recovery heat exchanger.

A solution especially well adapted when applying the second reheating is to heat at least a part of the feedwater to a temperature higher than the typical inlet temperature to the economizer of combustion boiler, usually limited by the pressure of the first turbine extraction, it being even possible, in the case of a subcritical steam cycle, to vaporize a small percentage of it by either creating a two-phase flow or using an independent drum in the recovery heat exchanger at the maximum pressure of the steam cycle. In this way a good adaptation of the heat yield and absorption curves in the recovery heat exchanger is attained, because, in determining the temperature at which the second steam reheating is to be started, it is convenient in many cases to select values above those of the typical inlet temperature of the feedwater to the combustion boiler.

In the case of heating all the feedwater and/or condensate flow, at least within certain temperature range, by means of the gas turbine exhaust gases, there is the possibility of physically eliminating from the facility the corresponding regenerative water heaters and steam extractions. It would be convenient, however, to maintain some or all of the heaters even if these would be left virtually without operating under rated operating conditions, in order to ensure acceptable operating conditions with the steam cycle in case of unavailability of the gas turbine.

For the purpose of ensuring a steam cycle operation under optimum conditions dose to design conditions, whether in gas turbine - steam cycle combined cycle mode or in a conventional way, i.e. with coal only, another steam turbine can he installed. This turbine should be able to admit in combined cycle operation a reheated steam flow thereby derived, in the outlet conditions of the recovery heat exchanger, and to expand it until condensation. All this is to exhaust in these conditions the rest of the stages of the main steam turbine to compensate for the increase of the specific volume due to the combined reheating and the reduction of extraction flow. This second turbine will not operate when the plant is working with coal only as steam power plant without gas turbine.

The characteristic reheating can be carried out directly before the admission to turbine's low-pressure body or a special setting of the main turbogroup, in which the intermediate-pressure body is divided into two parts may be adopted, to carry out a total extraction of steam at the pressure of the second reheating, so that, once the steam has been reheated, the first part of the expansion is performed in the second part of the intermediate-pressure body until the new conditions of admission to low-pressure body, which in this case correspond to a lower pressure than that of the second reheating, are achieved.

As examples of application of the process of enhancement described, two variants, from among many possible schematics with subcritical and supercritical steam cycles, are shown. In one of them, the exhaust gases from the gas turbine, besides being used for a second intermediate steam reheating, are used for heating part of the main flow of condensate and feedwater of a subcritical steam cycle (example 1) and in the other, all the main flow of condensate and feedwater of an also subcritical steam cycle is heated within a certain temperature range (example 2), whereby most of the regenerative water heaters are eliminated.

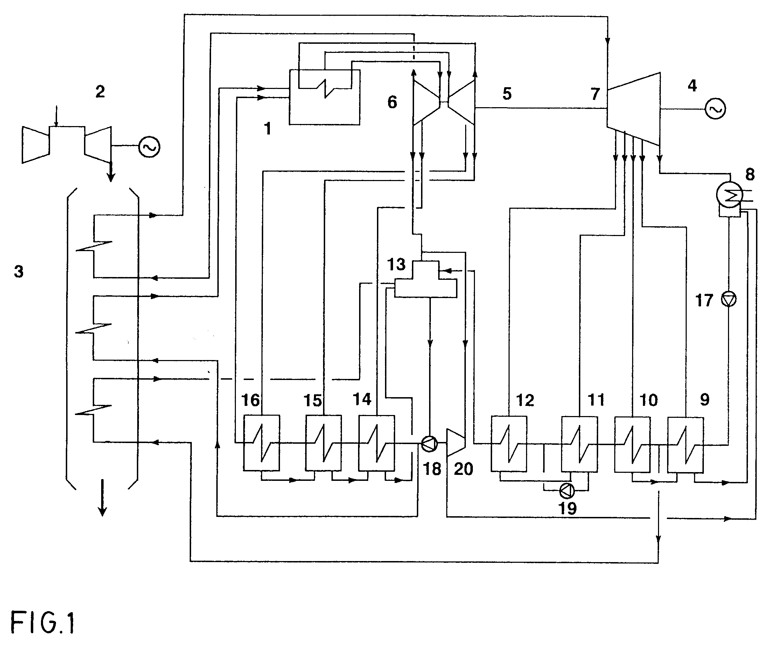

In example 1, the basic thermal schematic, represented in figure 1, comprises a coal boiler (1), a gas turbine (2), a recovery heat exchanger (3), a steam turbine (4) with high-pressure body (CAP) (5), intermediate-pressure body (CMP) (6) and low-pressure body (CBP) (7), a condenser (8), four low-pressure heaters (9), (10), (11) and (12), a deaerator (13), three high-pressure heaters (14), (15) and (16), a condensate pump (17), a feedpump (18), a drain pump (19) and a drive turbine (20).

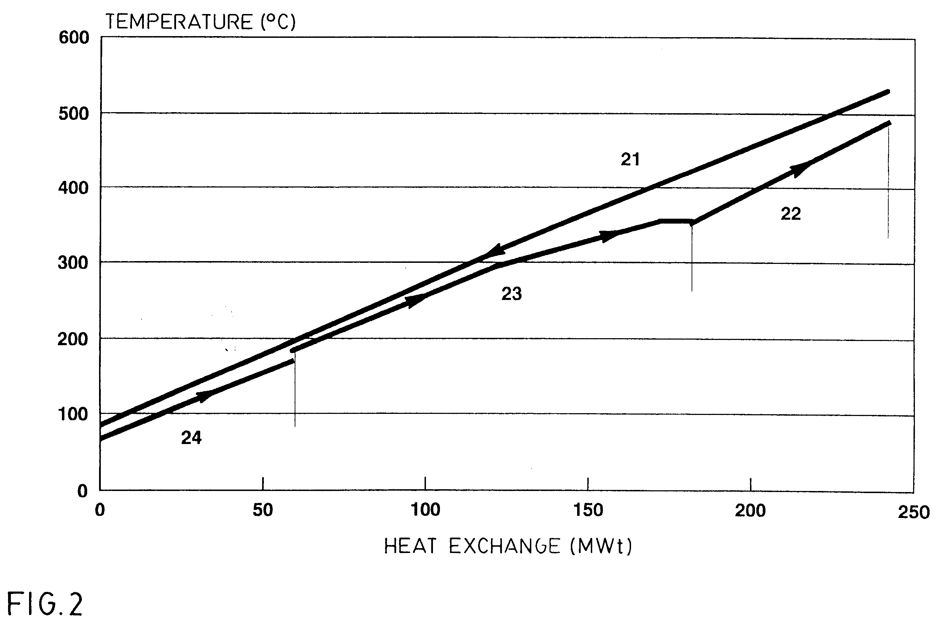

In recovery heat exchanger (3), of which a temperature - exchanged thermal power diagram is shown in figure 2, exhaust gases (21) from the gas turbine are used, in the first place, for carrying out the second steam reheating (22) characterizing this invention and, later, for heating part of the main feedwater flow, whereby a small percentage is vaporized (23) and, finally, for heating part of the main condensate flow (24) to a temperature slightly lower than that of saturation in the deaerator. The flow in two phases obtained in transformation (23) is led to the drum of the coal boiler (1), whereas the hot condensate flow obtained in transformation (24) is directly led to deaerator (13). The second reheating (22) is carried out in this case between CMP (6) and CBP (7) of steam turbine (4). The rest of the characteristics of the schematic are totally typical of steam cycles of thermal power plants. Table 1 shows the basic results of thermal balance of the plant corresponding to this example 1.

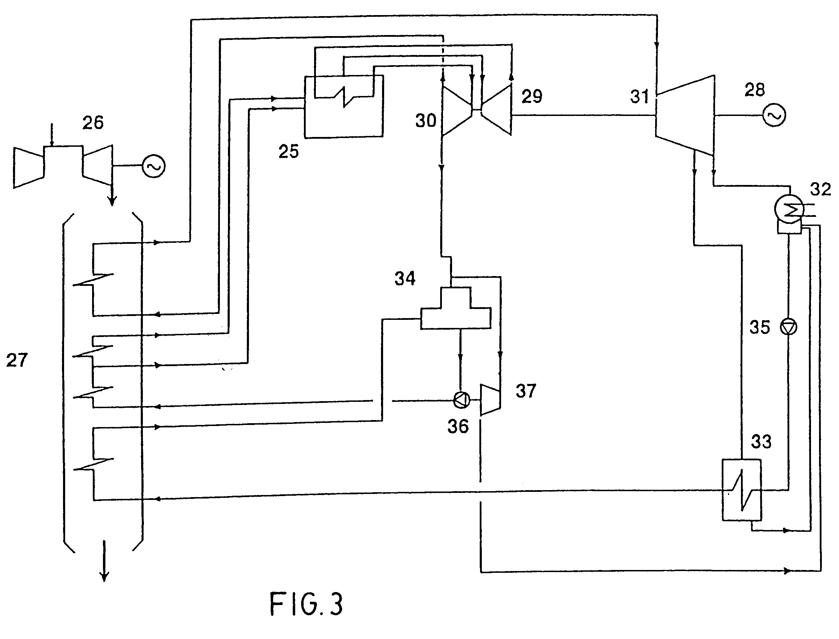

In example 2, the basic thermal schematic, represented in figure 3, comprises a coal boiler (25), a gas turbine (26), a recovery heat exchanger (27), a steam turbine (28) with high-pressure body (CAP) (29), intermediate-pressure body (CMP) (39) and low-pressure body (31), a condenser (32), a low-pressure heater (33), a deaerator (34), a condensate pump (35), a feedpump (36) and a drive turbine (37).

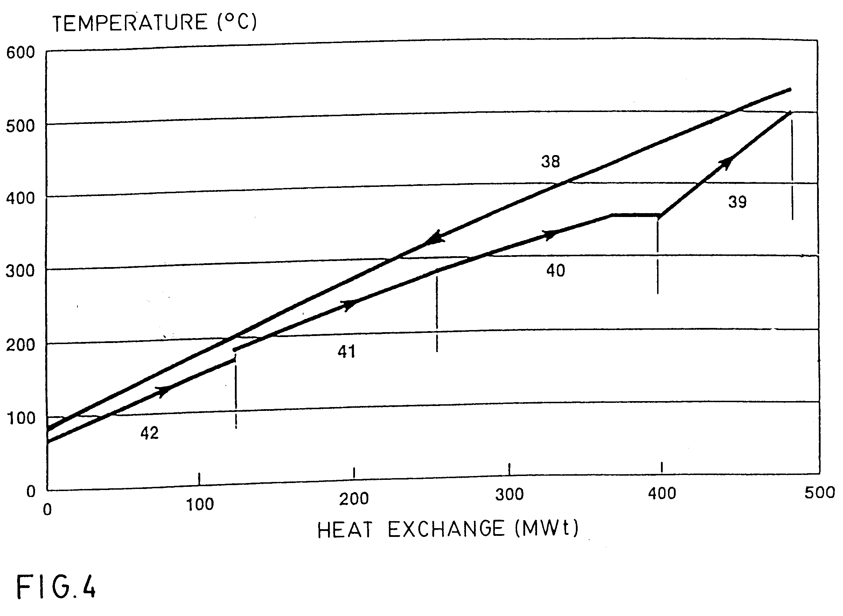

In recovery heat exchanger (27), of which a temperature - exchanged thermal power diagram is shown in figure 4, exhaust gases (38) from the gas turbine are used, firstly, for carrying out the second reheating (39) that characterizes this invention and, later, for heating part of the total feedwater flow, whereby a small percentage is vaporized (40), then for heating all the feedwater flow (41) to the inlet temperature to coal boiler's economizer (25) and, finally for heating all the condensate flow (42) to a temperature somewhat lower than that of saturation in the deaerator. The two-phase flow obtained in transformation (40) is led to the drum of coal boiler (25). The hot condensate flow obtained in transformation (42) is led to deaerator (34). The second reheating (39) is carried out, also in this case, between CMP (30) and CBP (31 of steam turbine (28). The rest of the characteristics of the schematic are typical of steam cycles of thermal power plants, with the particularity of great simplification of the condensate and feedwater heating. Table 2 shows the basic results of thermal balance of the plant corresponding to this example 2.

**TABLE 1**

| | |
|---|---|
| - AVERAGE COAL CONSUMPTION: | 39.98 kg/s |
| - AVERAGE LHV OF COAL: | 15,878 kJ/kg |
| - THERMAL POWER OF COAL: | 634.870 kWt |
| - BOILER EFFICIENCY ON LHV: | 89.5 % |
| - POWER ABSORBED BY FLUID IN BOILER: | 568.209 kWt |
| - TOTAL ELECTRICAL OUTPUT OF GAS TURBINE: | 151,350 kWe |
| - TOTAL THERMAL POWER OF GAS CONSUMED: | 430,828 kWt |
| - TOTAL EXHAUST GAS FLOW: | 495.58 kg/s |
| - EXHAUST GAS TEMPERATURE: | 532 °C |
| - RECOVERY EXCHANGER OUTLET GAS TEMPERATURE: | 85 °C |
| - POWER ABSORBED BY FLUID IN RECOVERY EXCHANGER: | 242,133 kWt |
| - TEMP. OF FEEDWATER TO COAL BOILER ECONOMIZER: | 282 °C |
| - STEAM PRESSURE BEFORE CAP VALVES: | 161.8 bar a |
| - STEAM TEMPERATURE BEFORE CAP VALVES: | 538 °C |
| - STEAM FLOW AT CAP ADMISSION: | 245.4 kg/s |
| - POWER YIELDED BY FLUID IN CAP: | 80,774 kW |
| - STEAM PRESSURE AT CMP ADMISSION: | 37.8 bar a |
| - STEAM TEMPERATURE AT CMP ADMISSION: | 538 °C |
| - STEAM FLOW AT CMP ADMISSION: | 228.1 kg/s |
| - POWER YIELDED BY FLUID IN CMP: | 83,389 kW |
| - STEAM PRESSURE AT CBP ADMISSION: | 9.8 bar a |
| - STEAM TEMPERATURE AT CBP ADMISSION: | 490 °C |
| - STEAM FLOW AT CBP ADMISSION: | 205.5 kg/s |
| - POWER YIELDED BY FLUID IN CBP: | 194,816 kW |
| - CONDENSING PRESSURE: | 0.051 bar a |
| - WETNESS IN CBP EXHAUST: | 3.8 % |
| - THERMAL POWER YIELDED BY FLUID IN CONDENSATION: | 451,786 kWt |
| - TOTAL POWER YIELDED BY FLUID IN TURBINE: | 358,979 kW |
| - ELECTRICAL OUTPUT ON STEAM TURBOGROUP TERMINALS: | 350,071 kWe |
| - TOTAL POWER GENERATED ON ALTERNATOR TERMINALS: | 501,421 kWe |
| - TOTAL THERMAL POWER CONSUMED (COAL + GAS): | 1,065,698 kWt |
| - GLOBAL ELECTRICAL EFFICIENCY: | 47.1 % |

**TABLE 2**

| | |
|---|---|
| - AVERAGE COAL CONSUMPTION: | 42.61 kg/s |
| - AVERAGE LHV OF COAL: | 15,878 kJ/Kg |
| - THERMAL POWER OF COAL: | 676,520 kWt |
| - BOILER EFFICIENCY ON LHV: | 89.5 % |
| - POWER ABSORBED BY FLUID IN BOILER: | 605,485 kWt |
| - TOTAL ELECTRICAL OUTPUT OF GAS TURBINE: | 302,700 kWe |
| - TOTAL THERMAL POWER OF GAS CONSUMED: | 861,656 kWt |
| - TOTAL EXHAUST GAS FLOW: | 991.2 kg/s |
| - EXHAUST GAS TEMPERATURE: | 532 °C |
| - RECOVERY EXCHANGER OUTLET GAS TEMPERATURE: | 85 °C |
| - POWER ABSORBED BY FLUID IN RECOVERY EXCHANGER: | 484,266 kWt |
| - TEMP. OF FEEDWATER TO COAL BOILER ECONOMIZER: | 282 °C |
| - STEAM PRESSURE BEFORE CAP VALVES: | 161.8 bar a |
| - STEAM TEMPERATURE BEFORE CAP VALVES: | 538 °C |
| - STEAM FLOW AT CAP ADMISSION: | 286.5 kg/s |
| - POWER YIELDED BY FLUID IN CAP: | 95,705 kW |
| - STEAM PRESSURE AT CMP ADMISSION: | 37.8 bar a |
| - STEAM TEMPERATURE AT CMP ADMISSION: | 538 °C |
| - STEAM FLOW AT CMP ADMISSION: | 286.5 kg/s |
| - POWER YIELDED BY FLUID IN CMP: | 106,342 kW |
| - STEAM PRESSURE AT CBP ADMISSION: | 9.8 bar a |
| - STEAM TEMPERATURE AT CBP ADMISSION: | 500 °C |
| - STEAM FLOW AT CBP ADMISSION: | 270.5 kg/s |
| - POWER YIELDED BY FLUID IN CBP: | 266,956 kW |
| - CONDENSING PRESSURE: | 0.051 bar a |
| - WETNESS IN CBP EXHAUST: | 3.5 % |
| - THERMAL POWER YIELDED BY FLUID IN CONDENSATION: | 621,280 kWt |
| - TOTAL POWER YIELDED BY FLUID IN TURBINE: | 469,003 kW |
| - ELECTRICAL OUTPUT ON STEAM TURBOGROUP TERMINALS: | 457,365 kWe |
| - TOTAL POWER GENERATED ON ALTERNATOR TERMINALS: | 760,065 kWe |
| - TOTAL THERMAL POWER CONSUMED (COAL + GAS): | 1,538,176 kWt |
| - GLOBAL ELECTRICAL EFFICIENCY: | 49.42 % |

Once the nature of the present invention, as well as a mode of its implementation, have been sufficiently described, it is to be added that as a whole and in composing parts, changes in modes, materials and layout may be introduced, provided that they do not substantially alter the characteristics of the invention as claimed in following pages.

## Claims

1. A process of enhancement for combined cycle power plants with parallel delivery of energy to the steam cycle in a fossil fuel boiler, characterized by that part of the waste heat of the exhaust gases from the gas turbine is used for carrying out a second intermediate reheating of the main flow of the steam cycle.

2. A process, as per claim 1, characterized by that at least part of the feedwater flow is heated to a higher temperature than the typical inlet temperature to the economizer of the combustion boiler, by means of energy contained in the exhaust gases from the gas turbine.

3. A process, as per claim 2, characterized by that, in the case of a subcritical steam cycle, some steam is generated at the maximum pressure of the steam cycle, by means of energy contained in the exhaust gases of the gas turbine.

4. A process, as per claim 1, characterized by that a part of the main steam flow, once the characteristic second reheating has been carried out, is derived to an additional steam turbine to be expanded therein to the condensing conditions, whereas the remaining steam is expanded in the main steam turbine.

5. A process, as per claim 1, characterized by that a thermal fluid that transfers heat is employed in such a manner that said thermal fluid absorbs energy of the gas-turbine exhaust gases and transfers it to the steam for the characteristic second reheating.
